# FASCICULE DE BREVET EUROPEEN

(11) **EP 2 878 873 B1**
(45) Date de publication et mention de la délivrance du brevet: **22.02.2017**
(21) Numéro de dépôt: 14195275.4
(22) Date de dépôt: 27.11.2014
(51) Int. Cl.: F16L 37/091

(54) **DISPOSITIF DE RACCORDEMENT RAPIDE DE TYPE CARTOUCHE**
PATRONENARTIGE SCHNELLKUPPLUNGSVORRICHTUNG
CARTRIDGE-TYPE QUICK-COUPLING DEVICE

(30) Priorité: 29.11.2013 FR 1361907
(43) Date de publication de la demande: 03.06.2015
(73) Titulaire: Parker Hannifin Manufacturing France SAS, 74112 Annemasse (FR)
(72) Inventeur: Le Quere, Philippe, 35830 Betton (FR)
(74) Mandataire: Lavialle, Bruno François Stéphane

(56) Documents cités:
- WO-A1-2006/037971
- DE-A1-102011 109 787
- DE-A1-102011 109 788
- FR-A1- 2 876 774
- FR-A1- 2 958 713

## Description

### DOMAINE DE L'INVENTION

La présente invention concerne un dispositif de raccordement rapide d'un tube à un élément de circuit de transport de fluide. L'invention concerne plus particulièrement les dispositifs de raccordement rapide de type cartouche.

### ARRIERE PLAN DE L'INVENTION

On connaît des dispositifs de raccordement rapide de type cartouche qui sont destinés à être insérés dans un puits cylindrique ménagé dans un élément d'un circuit de transport de fluide tel qu'une pompe, un distributeur, un actionneur, un module pneumatique, un régulateur de débit ou de pression ou encore un autre tube. Un tel dispositif comprend généralement un corps tubulaire pourvu intérieurement d'une rondelle dentée de retenue d'un tube et pourvu extérieurement de moyens d'ancrage du dispositif dans le puits cylindrique.

Le dispositif comprend souvent un poussoir de déconnexion tubulaire qui est monté à coulissement, dans un canal du corps tubulaire, entre une position sortie et une position enfoncée et qui est destiné, lorsqu'il est enfoncé dans le corps, à agir sur les dents de la rondelle de retenue du tube afin de provoquer la libération de celui-ci.

Dans une version particulièrement élaborée, le corps du dispositif a, à l'opposé du poussoir, une extrémité en saillie axiale de laquelle s'étend une bague de protection qui porte un joint annulaire d'étanchéité. Au cours de l'insertion du dispositif dans le puits, cette bague vient en appui contre un épaulement d'entrée d'un logement du puits et se détache de l'extrémité du corps pour coulisser sur le corps au fur et à mesure de l'insertion du dispositif jusqu'à s'escamoter de manière que le joint annulaire va être poussé seul dans ce logement du puits.

Généralement, la partie du corps portant la bague de protection, et sur laquelle celle-ci coulisse, est solidaire d'un insert qui est clipé dans le corps et reçoit le poussoir à coulissement. Cet insert rend plus simple le montage de la rondelle de retenue, prisonnière entre le corps et l'insert.

De tels dispositifs de raccordement
rapide de type cartouche sont divulgués dans les
document FR 2 958 713 Al et FR 2876 774 A1.

Pour certaines applications, et particulièrement dans les installations pneumatiques qui comportent des équipements reliés par de multiples tubes à d'autres éléments du circuit pneumatique de ces installations, les installateurs cherchent à fournir des équipements de plus en plus compacts et légers. De telles spécifications impliquent notamment de réduire l'entraxe entre les tubes reliant les équipements aux autres éléments du circuit pneumatique. Cet entraxe est, en particulier, lié au diamètre du puits recevant le dispositif de raccordement rapide à cartouche, et donc de l'encombrement de la cartouche.

Il a d'abord été envisagé de réduire les épaisseurs des matériaux constituant les éléments de la cartouche. Cependant, il s'est avéré qu'une réduction significative ne pouvait être obtenue avec les matériaux habituellement employés, comme les matières synthétiques injectables, sans compromettre les caractéristiques mécaniques du dispositif.

Il a été également envisagé d'utiliser d'autres matériaux plus résistants tels que l'acier, mais les opérations de mise en forme (emboutissage ou usinage) rendent cette solution non économique. Enfin l'augmentation de masse induite par l'utilisation de tels matériaux est incompatible avec les objectifs de de légèreté des installateurs.

### OBJET DE L'INVENTION

Le but de l'invention est de proposer un dispositif de raccordement de type cartouche ayant un encombrement réduit par rapport aux dispositifs existant.

### RESUME DE L'INVENTION

A cet effet, on prévoit un dispositif de raccordement rapide de type cartouche insérable dans un puits d'un élément de circuit à raccorder à un tube d'axe longitudinal. Le dispositif comporte un corps tubulaire délimitant un canal, une rondelle de retenue du tube dans le dispositif, un poussoir tubulaire de déconnexion qui est monté à coulissement dans le canal et qui délimite un conduit de passage du tube, et des moyens d'ancrage du dispositif de raccordement dans le puits. Le corps a une extrémité pourvue d'une bague escamotable qui s'étend en saillie axiale de ladite extrémité pour porter intérieurement un organe annulaire d'étanchéité du dispositif de raccordement et pour être susceptible d'être ramenée sur le corps pour libérer l'organe annulaire d'étanchéité dans le puits. Selon l'invention, la rondelle de retenue est disposée dans la bague escamotable entre le corps et l'organe annulaire d'étanchéité.

Cet agencement permet de se passer d'insert pour le montage de la rondelle de retenue, limitant l'encombrement radial du dispositif.

Avantageusement, l'entretoise est de forme sensiblement annulaire et comprend une première face de contact avec le joint annulaire s'étendant transversalement et une deuxième face opposée à la première comprenant un chanfrein interne. Ceci permet d'assurer un contact uniforme de la première face avec le joint et de laisser un débattement aux dents de la rondelle de retenue lorsque le poussoir de déconnexion est actionné.

Selon un mode préféré de réalisation, la bague de protection est reliée à la douille centrale par une paroi frangible, ce qui contribue à réduire l'encombrement du dispositif ainsi que ses coûts de production.

Préférentiellement, les moyens d'ancrage du corps tubulaire dans le logement comprennent une rondelle d'ancrage externe portée par le poussoir tubulaire de déconnexion.

Selon un mode de réalisation particulier, l'extrémité du poussoir tubulaire faisant face à la rondelle de retenue du tube comprend au moins une fente axiale. Cette fente autorise une plus grande souplesse de l'extrémité du poussoir tubulaire et facilite le montage de celui-ci dans le dispositif de raccordement rapide.

### BREVE DESCRIPTION DES DESSINS

D'autres caractéristiques et avantages de l'invention apparaîtront à la lecture de la description qui suit d'un mode de réalisation particulier non limitatif de l'invention en relation avec les figures ci-jointes parmi lesquelles :
- la figure 1 est une demi-vue en coupe du dispositif selon l'invention, avant son installation dans le puits ;
- la figure 2 est une demi-vue en coupe du dispositif de la figure 1, après son installation dans le puits ;
- la figure 3 est une demi-vue en coupe du dispositif de la figure 1, au cours de l'insertion du dispositif dans le puits ;
- la figure 4 est une demi-vue en coupe du dispositif de la figure 1, à la fin de l'insertion du dispositif dans le puits ;
- la figure 5 est une demi-vue en coupe du dispositif de la figure 1, en position dans le puits et raccordé à un tube ;
- la figure 6 est une vue de la section d'un joint annulaire d'étanchéité du dispositif de la figure 1 ;
- la figure 7 est une vue de détail de la rondelle d'ancrage du dispositif de la figure 1 ;
- la figure 8 est une vue en coupe selon un axe VIII-VIII de la rondelle de la figure 7 ;
- la figure 9 est une vue de détail de la rondelle d'ancrage selon une variante de réalisation ;
- la figure 10 est une vue en coupe selon un axe X-X de la rondelle de la figure 9 ;
- la figure 11 est une vue de détail de la rondelle d'ancrage des figures 7 et 8 ;
- la figure 12 est une vue de détail de la rondelle d'ancrage des figures 9 et 10.

### DESCRIPTION DETAILLEE DE L'INVENTION

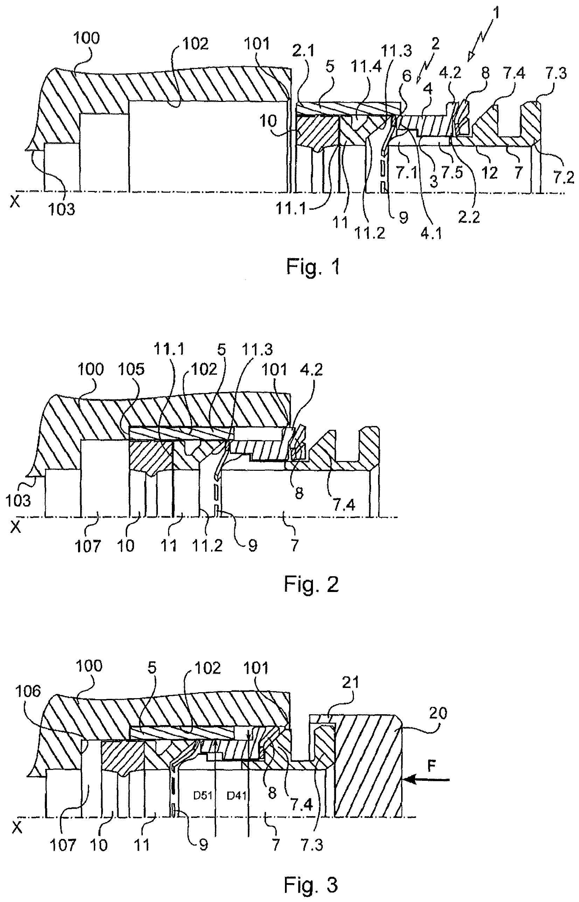

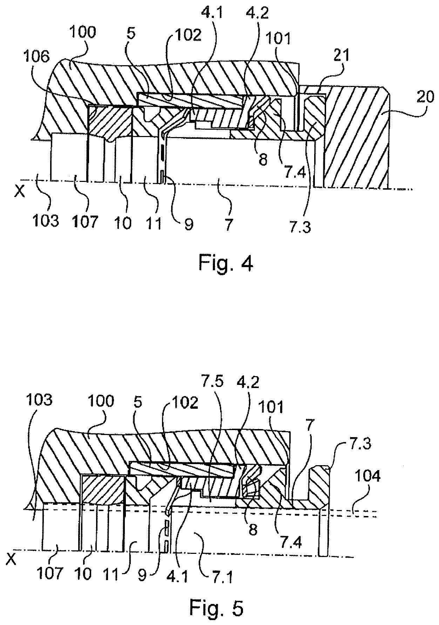

Sur les figures 1 à 5, est représenté un dispositif de raccordement rapide de type cartouche généralement désigné 1 et destiné à être inséré par une ouverture 101 dans un puits 102 d'un élément de circuit 100. Le puits 102 est en communication fluidique avec un canal 103 de l'élément de circuit 100 auquel doit être raccordé un tube 104 (visible en trait pointillé sur la figure 5) une fois celui-ci engagé dans le dispositif de raccordement 1.

Le dispositif de raccordement 1 comprend un corps, généralement désigné en 2, qui a une forme tubulaire s'étendant selon un axe longitudinal X et délimitant un canal intérieur 3. Le corps 2 comprend une première extrémité 2.1 par laquelle le dispositif 1 est destiné à être engagé dans le puits 102 et une deuxième extrémité 2.2 destinée à s'étendre au voisinage de l'ouverture 101 lorsque le dispositif est dans le puits 102.

Plus précisément, le corps 2 à la forme d'une douille centrale 4 comportant un épaulement 4.2 du côté de l'extrémité 2.2 du corps 2 ainsi qu'une extrémité opposée 4.1 à laquelle est reliée une bague escamotable 5 en saillie axiale de l'extrémité 4.1. Cette bague escamotable 5 est reliée par une paroi frangible 6 à l'extrémité 4.1 de la douille centrale 4. La bague escamotable 5 a une longueur supérieure à la longueur de la douille centrale 5 entre l'extrémité 4.1 et l'épaulement 4.2. Le dispositif de raccordement 1 comprend également un poussoir de déconnexion 7, de forme tubulaire, monté à coulissement à l'intérieur du canal 3.

Le poussoir de déconnexion 7 comprend, en sa première extrémité 7.2 qui vient en saillie axiale du côté de l'extrémité 2.2 du corps 2, un premier épaulement annulaire 7.3 suivi d'un deuxième épaulement annulaire 7.4, de forme tronconique dont la portion de plus faible diamètre fait face à une rondelle d'ancrage externe 8. Le deuxième épaulement annulaire 7.4 est formé par une surface d'une collerette dont le diamètre externe est sensiblement égal au diamètre du puits 102 de sorte que ladite collerette assure un guidage du poussoir de déconnexion 7 dans le puits 102. La deuxième extrémité 7.1 du poussoir de déconnexion 7 fait face à une rondelle intérieurement dentée 9 de retenue du tube 104 et est biseautée de manière à pouvoir soulever les dents de ladite rondelle intérieurement dentée 9 lorsque le poussoir de déconnexion 7 est enfoncé dans le corps 2. L'extrémité 7.1 du poussoir de déconnexion 7 comprend deux fentes axiales 7.5 à 180° l'une de l'autre et s'étendant sur environ un tiers de la longueur du poussoir de déconnexion 7. Les fentes 7.5 facilitent la mise en place de la rondelle d'ancrage 8 et de la douille centrale 4 sur le poussoir de déconnexion 7.

Le poussoir de déconnexion 7 délimite un conduit 12 de passage du tube 104 et porte la rondelle d'ancrage 8 située entre le deuxième épaulement 7.4 du poussoir de déconnexion 7 et l'épaulement 4.2 de la douille centrale 4.

Le fait que cette rondelle d'ancrage externe 8 soit portée par le poussoir de déconnexion 7, signifie que la rondelle d'ancrage externe 8 est maintenue en position relativement aux autres éléments du dispositif 1 notamment grâce au poussoir de déconnexion 7 et qu'elle est en contact avec le poussoir de déconnexion 7.

La bague escamotable 5 est maintenant décrite en détail. Celle-ci porte intérieurement, successivement depuis son extrémité distale jusqu'à l'extrémité 4.1 de la douille centrale 4, un joint d'étanchéité 10 annulaire, une entretoise 11 et la rondelle intérieurement dentée 9 de retenue du tube 104. L'entretoise 11 a une forme annulaire de diamètre intérieur supérieur au diamètre externe du tube et est montée dans la bague escamotable 5 entre le joint d'étanchéité 10 et la rondelle intérieurement dentée 9 de retenue. Le fait que la bague escamotable 5 porte intérieurement le joint d'étanchéité 10, l'entretoise 11 et la rondelle intérieurement dentée 9 signifie que ces éléments sont maintenus en position relativement aux autres éléments du dispositif 1 notamment grâce à la bague escamotable 5 et qu'ils sont en contact avec celle-ci.

La bague escamotable 5 a un diamètre intérieur D51 légèrement supérieur au diamètre extérieur D41 de la douille centrale 4 (voir la figure 3). La bague escamotable 5 peut alors coulisser selon une direction axiale sur une distance légèrement supérieure à la largeur du joint d'étanchéité 10 avant de venir en butée sur la face de l'épaulement 4.2 opposée à l'extrémité 2.2 du corps tubulaire 2.

En référence aux figures 1 à 5, est détaillée la mise en place du dispositif de raccordement rapide 1 dans le puits 102.

Lors de l'insertion du dispositif de raccordement 1 dans le puits 102, l'extrémité de la bague escamotable 5 vient en butée contre un épaulement 105 du puits 102 (figure 2).

L'installateur dispose alors une cloche d'assemblage cylindrique 20 en appui sur une face radiale de l'épaulement 7.3 du poussoir de déconnexion 7 (figure 3). Un rebord circulaire 21 vient en saillie de la cloche d'assemblage 20 et s'étend autour de l'épaulement 7.3 pour faciliter le centrage de la cloche d'assemblage 20 sur le poussoir de déconnexion 7 et pour éviter un enfoncement trop important de celui-ci comme on le verra plus loin. L'utilisateur applique ensuite un effort d'insertion F modéré (ici inférieur ou égal à 50 décanewton) sur la face de la cloche d'assemblage 20 opposée à celle qui est en appui contre l'épaulement 7.3. Cet effort F va provoquer la venue en butée de l'épaulement 7.4 du poussoir de déconnexion 7 contre 1'épaulement 4.2 de la douille centrale 2 en comprimant la rondelle d'ancrage 8. A cet effet, les formes de ces trois éléments sont complémentaires et agencées pour réduire la portion des dents de la rondelle d'ancrage 8 venant en saillie radiale du corps 2 lorsque celle-ci est serrée entre les épaulements 7.4 et 4.2, facilitant l'insertion de la rondelle d'ancrage 8 dans le puits 102.

Soumise à l'effort d'insertion, la paroi frangible 6 se rompt et autorise alors le coulissement relatif de la bague escamotable 5 par rapport au reste du dispositif de raccordement 1. Ainsi, le déplacement du poussoir tubulaire de déconnexion 7 en butée contre la douille centrale 4 entraîne la translation, par rapport à la bague escamotable 5 et au puits 102, de la douille centrale 4 qui va pousser les éléments portés par la bague escamotable 5 (à savoir la rondelle intérieurement dentée 9, l'entretoise 11 et le joint d'étanchéité 10) vers un logement 107 du puits 102. Cette translation s'opère jusqu'à ce que le bord du rebord circulaire 21 vienne en appui sur l'élément de circuit 100. Ceci correspond à la venue en butée de la face radiale du joint d'étanchéité 10 contre une paroi 106 du logement 107. On notera qu'alors une partie de l'entretoise 11 est reçue également dans le logement 107 tandis que l'autre partie de l'entretoise 11 et la rondelle intérieurement dentée 9 restent dans la portion de la bague escamotable 5 qui reste en saillie de la douille centrale 4. L'utilisateur dépose alors la cloche de montage 20. Sous l'effet du retour en position des dents de la rondelle intérieurement dentée 9, le poussoir de déconnexion 7 revient en position initiale contre une butée intérieure de la douille centrale 4. Ce faisant, le poussoir de déconnexion 7 se dégage de la rondelle d'ancrage 8 (figure 5) qui ancre le dispositif de raccordement rapide 1 dans le puits 102. Le tube 104 peut être alors introduit dans le conduit 12 du poussoir de déconnexion 7 pour être raccordé hermétiquement au canal 103. Dans cette position, on note que la collerette formant l'épaulement 7.4 est en regard de la paroi interne du puits 102 et permet de guider et centrer le poussoir de déconnexion 7 dans le puits 102.

On obtient ainsi un dispositif de raccordement rapide dans lequel l'épaisseur de la bague 5 contribue à la résistance mécanique lorsque le dispositif est en place, permettant ainsi de réduire l'encombrement du dispositif.

Lors de la mise sous pression du circuit dans lequel est implanté le dispositif de l'invention, on veillera à ce que, malgré un recul relativement important de la cartouche, le joint d'étanchéité 10 reste de préférence entièrement dans le logement 107 afin d'éviter un risque de fuite. Un tel recul survient par exemple lorsque le puits 102 est réalisé dans un matériau relativement tendre : les dents de la rondelle d'ancrage 8 vont pénétrer plus profondément dans le matériau tendre.

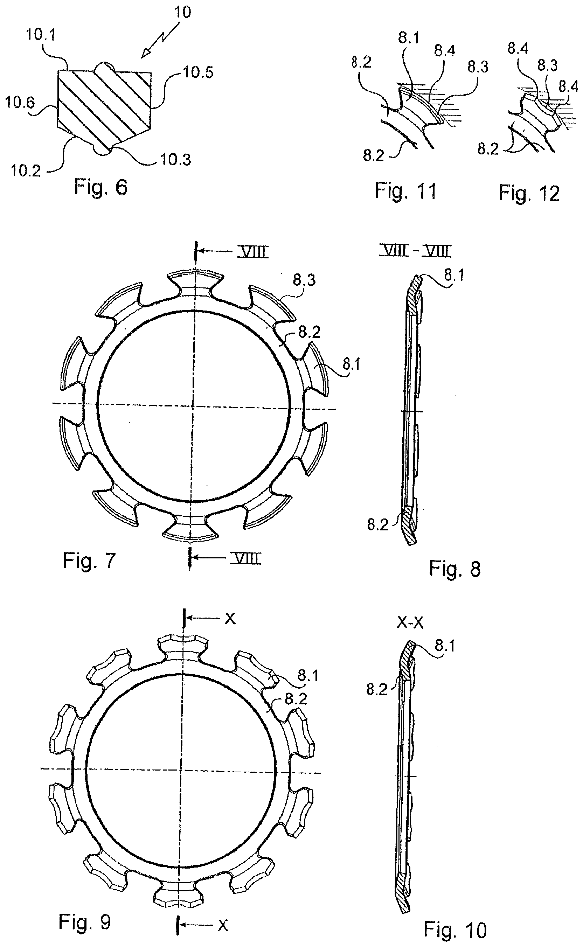

Préférentiellement, et en référence à la figure 6, le joint d'étanchéité 10 est, ici, un joint comportant un bourrelet sur ses circonférences extérieure 10.1 et intérieure 10.2, et dont le bourrelet 10.3 de la circonférence intérieure 10.2 est relié à au moins une des faces latérales 10.4 et 10.5 du joint d'étanchéité 10 par une surface tronconique non tangente au bourrelet interne 10.3.

Avantageusement, l'entretoise 11 est de forme sensiblement annulaire et comprend une première face 11.1 de contact avec le joint d'étanchéité 10 s'étendant transversalement et une deuxième face 11.2, opposée à la première, comprenant un chanfrein interne 11.3.

Ce chanfrein interne 11.3 permet l'ouverture des dents de la rondelle intérieurement dentée 9 au passage du tube 104 ou lors de l'actionnement du poussoir de déconnexion 7.

La surface extérieure de l'entretoise 11 est également pourvue d'une gorge annulaire 11.4 - ici de section sensiblement triangulaire - qui permet d'économiser de la matière, du poids et d'éviter le phénomène de retassure de la matière de l'entretoise, garantissant alors une conformité géométrique améliorée. Enfin, le fait que cette gorge ne soit pas disposée symétriquement à l'axe de la pièce permet de l'utiliser en tant que détrompeur dans les machines de fabrication automatique du dispositif de raccordement rapide 1.

La rondelle d'ancrage 8 va maintenant être décrite plus en détail en relation avec les figures 7 à 12 .

La rondelle d'ancrage 8 est métallique et comprend des dents 8.1 reliées par des portions circonférentielles 8.2 pour être déformable élastiquement entre un état de repos dans lequel la rondelle d'ancrage 8 a un diamètre externe supérieur au diamètre du puits 102 et un état déformé dans lequel la rondelle d'ancrage 8 a un diamètre externe inférieur au diamètre du puits 102. Chaque dent 8.1 a une partie libre avec un bord terminal 8.3 pour mordre dans la paroi du puits et une partie liée aux portions circonférentielles.

On a constaté que, pour mordre dans un matériau dur (comme l'acier), il était avantageux que le bord terminal présente une forme permettant localement une concentration de contraintes sur la paroi du puits et que, pour mordre dans un matériau tendre (comme une matière synthétique telle que le polyamide), il était avantageux que le bord terminal présente une forme permettant une relativement grande longueur/surface de contact avec la paroi du puits.

Selon une première caractéristique particulièrement avantageuse, la partie libre des dents est élargie par rapport à la partie liée et le bord terminal comporte au moins une portion favorisant les concentrations de contrainte à distance des extrémités du bord terminal. La portion favorisant les concentrations de contrainte à distance des extrémités du bord terminal facilite la pénétration dans les matériaux relativement durs. L'élargissement de la partie libre et le positionnement de la portion favorisant les concentrations de contrainte à distance des extrémités du bord terminal permet d'avoir une relativement grande longueur/surface de contact avec la paroi du puits lorsque celui-ci est réalisé dans un matériau relativement tendre.

Selon un mode de réalisation préféré représenté aux figures 7, 8 et 11, la rondelle d'ancrage 8 comprend des dents 8.1 en saillie vers l'extérieur, les dents étant reliées deux à deux par une portion circonférentielle plate 8.2 qui est élastiquement déformable en torsion pour permettre un déplacement des dents entre un état de libre passage du corps 2 dans le puits 102 et un état d'ancrage du corps 2 dans le puits 102. Les dents 8.1 sont inclinées vers l'arrière par rapport à un plan principal de la rondelle d'ancrage 8 pour favoriser la pénétration des dents 8.1 dans la paroi du puits 102 lorsque le dispositif a un mouvement de recul (par exemple lors de la mise sous pression du circuit).

La partie libre des dents 8.1 est élargie par rapport à la partie liée 8.2 et le bord terminal 8.3 comporte une portion 8.4 favorisant les concentrations de contrainte à distance des extrémités du bord terminal. Le bord terminal 8.3 est en tronçon de cercle de diamètre inférieur au diamètre du puits, la partie libre de la dent 8.1 ayant une forme convexe. Ainsi, le bord terminal 8.3 prend contact avec la paroi du puits 102 par sa portion centrale uniquement (qui constitue la portion 8.4), provoquant une concentration de contraintes dans la zone de contact, ce qui va faciliter la pénétration des dents dans le matériau. Dans le cas où le matériau de la paroi du puits est un matériau relativement tendre, la pénétration de chaque dent 8.1 va permettre une mise en contact d'une portion plus importante du bord terminal 8.3 avec le matériau constituant la paroi du puits, ce qui va répartir les contraintes et augmenter la résistance mécanique de l'ancrage.

Dans la variante des figures 9, 10 et 12, la partie libre des dents 8.1 est comme précédemment élargie par rapport à la partie liée 8.2 et le bord terminal 8.3 comporte deux portions 8.4 favorisant les concentrations de contrainte à distance des extrémités du bord terminal 8.3. Le bord terminal 8.3 comprend deux portions d'extrémité de forme arrondie convexe qui sont reliées l'une à l'autre par une portion centrale de forme arrondie concave. Entre chacune des portions d'extrémité et la portion d'extrémité concave est formée une pointe formant une des portions 8.4. Ainsi, le bord terminal 8.3 prend contact avec la paroi du puits 102 par ses portions 8.4 uniquement, provoquant une concentration de contraintes dans ces deux zones de contact, ce qui va faciliter la pénétration des dents dans le matériau. Dans le cas où le matériau de la paroi du puits est un matériau relativement tendre, la pénétration de chaque dent 8.1 va permettre une mise en contact d'une portion plus importante du bord terminal 8.3 avec le matériau constituant la paroi du puits, ce qui va répartir les contraintes et augmenter la résistance mécanique de l'ancrage.

Bien entendu, l'invention n'est pas limitée au mode de réalisation décrit mais englobe toute variante entrant dans le champ de l'invention telle que définie par les revendications.

En particulier :
- bien qu'ici l'ancrage du tube soit réalisé à l'aide d'une rondelle d'ancrage, l'invention s'applique également à d'autres moyens d'ancrage comme par exemple une bague élastique ou un manchon conique de contention entre le tube et le puits ;
- bien qu'ici les dents 8.1 ont une extrémité libre élargie, les dents 8.1 peuvent avoir une forme droite (en étant délimitées latéralement par des bords parallèles) ou une forme se rétrécissant (en étant délimitées latéralement par des bords radiaux). Ces formes sont toutefois mieux adaptées pour mordre des matériaux relativement durs, comme de l'acier. En outre, bien que particulièrement intéressantes dans le dispositif de l'invention, les rondelles d'ancrage à dents élargies, telles que celles des figures 7 à 12, sont utilisables pour l'ancrage de tout élément dans un puits ;

- bien qu'ici la bague escamotable soit reliée à la douille centrale par une paroi frangible, l'invention s'applique également à d'autres modes de liaison de la bague à la douille centrale comme par exemple une liaison par collage, clippage ou par emboîtement serré ;
- bien qu'ici le poussoir tubulaire de déconnexion comprenne deux fentes axiales, l'invention s'applique également à un poussoir comprenant un nombre différents de fentes axiales comme par exemple une unique fente axiale, trois, quatre voire plus que deux ; le poussoir peut aussi ne pas comprendre de fente selon la rigidité des matériaux utilisés ;
- bien qu'ici l'étanchéité du tube dans le puits soit assurée par un joint annulaire d'étanchéité comprenant des bourrelets internes et externes, l'invention s'applique également à d'autres types d'organes annulaires d'étanchéité tels qu'un joint dépourvu de bourrelets, un joint annulaire de section rectangulaire, de section circulaire ou de section quelconque. L'étanchéité peut également être obtenue en utilisant deux joints éventuellement de matériaux différents.

## Revendications

1. Dispositif de raccordement rapide (1) de type cartouche insérable dans un puits (102) d'un élément de circuit (100) à raccorder à un tube (104) d'axe longitudinal (X), comportant un corps tubulaire (2) délimitant un canal (3), une rondelle de retenue (9) du tube (104) dans le dispositif (1), un poussoir tubulaire de déconnexion (7) qui est monté à coulissement dans le canal (3) et qui délimite un conduit (12) de passage du tube (104), et des moyens d'ancrage (8) du dispositif de raccordement (1) dans le puits (102), le corps (2) ayant une extrémité pourvue d'une bague escamotable (5) qui s'étend en saillie axiale de ladite extrémité (2.1) pour porter intérieurement un organe annulaire d'étanchéité (10) du dispositif de raccordement (1) et pour être susceptible d'être ramenée sur le corps (2) pour libérer l'organe annulaire d'étanchéité (10) dans le puits (102), **caractérisé en ce que** la rondelle de retenue (9) est disposée dans la bague escamotable (5) entre le corps (2) et l'organe annulaire d'étanchéité (10).

2. Dispositif de raccordement rapide (1) d'un tube (104) selon la revendication 1, dans lequel une entretoise (11) est montée dans la bague escamotable (5) entre l'organe annulaire d'étanchéité (10) et la rondelle de retenue (9).

3. Dispositif de raccordement rapide (1) d'un tube (104) selon la revendication 2, dans lequel l'entretoise (11) est de forme sensiblement annulaire et comprend une première face (11.1) de contact avec l'organe annulaire d'étanchéité (10) s'étendant transversalement et une deuxième face (11.2) opposée à la première comprenant un chanfrein interne (11.3).

4. Dispositif de raccordement rapide (1) d'un tube (104) selon la revendication 2 ou 3, dans lequel la surface périphérique externe de l'entretoise (11) est pourvue d'une gorge annulaire (11.4).

5. Dispositif de raccordement rapide (1) d'un tube (104) selon la revendication 1, dans lequel la bague escamotable est reliée au corps tubulaire (2) par une paroi frangible.

6. Dispositif de raccordement rapide (1) d'un tube (104) selon la revendication 1, dans lequel les moyens d'ancrage du corps tubulaire (2) dans le puits (102) comprennent une rondelle d'ancrage externe (8).

7. Dispositif de raccordement rapide (1) d'un tube (104) selon la revendication 6, dans lequel la rondelle d'ancrage externe (8) est portée par le poussoir tubulaire de déconnexion (7).

8. Dispositif de raccordement rapide (1) d'un tube (104) selon la revendication 6, dans lequel la rondelle d'ancrage externe (8) comprend des dents (8.1) en saillie vers l'extérieur, les dents (8.1) étant reliées deux à deux par une portion circonférentielle plate (8.2) qui est élastiquement déformable en torsion pour permettre un déplacement des dents (8.1) entre un état de libre passage du corps tubulaire dans le puits (102) et un état d'ancrage du corps tubulaire (2) dans le puits (102).

9. Dispositif de raccordement rapide (1) d'un tube (104) selon la revendication 6, dans lequel la rondelle d'ancrage (8) comprend des dents (8.1) reliées par des portions circonférentielles (8.2) pour être déformable élastiquement entre un état de repos dans lequel la rondelle d'ancrage a un diamètre externe supérieur au diamètre du puits et un état déformé dans lequel la rondelle d'ancrage a un diamètre externe inférieur au diamètre du puits, chaque dent 8.1 ayant une partie libre avec un bord terminal 8.3 pour mordre dans la paroi du puits et une partie liée aux portions circonférentielles, la partie libre des dents étant élargie par rapport à la partie liée et le bord terminal comportant au moins une portion (8.4) favorisant les concentrations de contrainte à distance des extrémités du bord terminal.

10. Dispositif de raccordement rapide (1) d'un tube (104) selon la revendication 9, dans lequel le bord terminal (8.3) est en tronçon de cercle de diamètre inférieur au diamètre du puits, la partie libre de la dent (8.1) ayant une forme convexe.

11. Dispositif de raccordement rapide (1) d'un tube (104) selon la revendication 9, dans lequel le bord terminal (8.3) comprend deux portions d'extrémité de forme arrondie convexe qui sont reliées l'une à l'autre par une portion centrale de forme arrondie concave, entre chacune des portions d'extrémité et la portion d'extrémité concave étant formée une pointe

12. Dispositif de raccordement rapide (1) d'un tube (104) selon la revendication 1, dans lequel l'extrémité (7.1) du poussoir tubulaire de déconnexion (7) faisant face à la rondelle de retenue du tube (8) comprend au moins une fente axiale (7.5).

## Patentansprüche

1. Schnellkupplungsvorrichtung (1) nach Art einer Kartusche, die in eine Bohrung (102) eines mit einem Rohr (104) mit einer Längsachse (X) zu verbindenden Kreislaufelements (100) einsetzbar ist, umfassend ein rohrförmiges Gehäuse (2), das einen Kanal (3) begrenzt, eine Rückhalteringscheibe (9) zum Rückhalten des Rohres (104) in der Vorrichtung (1), einen rohrförmigen Trennstößel (7), der verschiebbar in dem Kanal (3) gelagert ist und eine Leitung (12) zum Durchführen des Rohres (104) begrenzt, sowie Verankerungsmittel (8) zum Verankern der Kupplungsvorrichtung (1) in der Bohrung (102), wobei das Gehäuse (2) ein Ende hat, das mit einem ausrückbaren Ring (5) versehen ist, der von dem genannten Ende (2.1) axial vorsteht, um innen ein ringförmiges Dichtungselement (10) der Kupplungsvorrichtung (1) zu tragen und um dazu geeignet zu sein, über das Gehäuse (2) gezogen zu werden, um das ringförmige Dichtungselement (10) in der Bohrung (102) freizugeben, **dadurch gekennzeichnet, dass** die Rückhalteringscheibe (9) in dem ausrückbaren Ring (5) zwischen dem Gehäuse (2) und dem ringförmigen Dichtungselement (10) angeordnet ist.

2. Schnellkupplungsvorrichtung (1) zur Schnellkupplung eines Rohres (104) nach Anspruch 1, bei der ein Abstandshalter (11) in dem ausrückbaren Ring (5) zwischen dem ringförmigen Dichtungselement (10) und der Rückhalteringscheibe (9) angebracht ist.

3. Schnellkupplungsvorrichtung (1) zur Schnellkupplung eines Rohres (104) nach Anspruch 2, bei dem der Abstandshalter (11) eine im Wesentlichen ringförmige Form hat und eine erste Seite (11.1) zum Kontakt mit dem ringförmigen Dichtungselement (10) umfasst, die sich quer erstreckt, sowie eine der ersten entgegengesetzte zweite Seite (11.2), die eine innere Abschrägung (11.3) umfasst.

4. Schnellkupplungsvorrichtung (1) zur Schnellkupplung eines Rohres (104) nach Anspruch 2 oder 3, bei der die äußere Umfangsfläche des Abstandshalters (11) mit einer ringförmigen Nut (11.4) versehen ist.

5. Schnellkupplungsvorrichtung (1) zur Schnellkupplung eines Rohres (104) nach Anspruch 1, bei der der ausrückbare Ring mit dem rohrförmigen Gehäuse (2) über eine zerbrechliche Wand verbunden ist.

6. Schnellkupplungsvorrichtung (1) zur Schnellkupplung eines Rohres (104) nach Anspruch 1, bei der die Verankerungsmittel zum Verankern des rohrförmigen Gehäuses (2) in der Bohrung (102) eine äußere Verankerungsringscheibe (8) umfassen.

7. Schnellkupplungsvorrichtung (1) zur Schnellkupplung eines Rohres (104) nach Anspruch 6, bei der die äußere Verankerungsringscheibe (8) von dem rohrförmigen Trennstößel (7) getragen wird.

8. Schnellkupplungsvorrichtung (1) zur Schnellkupplung eines Rohres (104) nach Anspruch 6, bei der die äußere Verankerungsringscheibe (8) nach außen vorstehende Zähne (8.1) umfasst, die paarweise über einen ebenen Umfangsabschnitt (8.2) verbunden sind, der elastisch torsionsverformbar ist, um eine Bewegung der Zähne (8.1) zwischen einem Zustand des freien Durchtritts des rohrförmigen Gehäuses in der Bohrung (102) und einem Zustand der Verankerung des rohrförmigen Gehäuses (2) in der Bohrung (102) zu gestatten.

9. Schnellkupplungsvorrichtung (1) zur Schnellkupplung eines Rohres (104) nach Anspruch 6, bei der die Verankerungsscheibe (8) Zähne (8.1) umfasst, die über Umfangsabschnitte (8.2) verbunden sind, um elastisch zwischen einem Ruhezustand, in dem die Verankerungsringscheibe einen Außendurchmesser hat, der größer als der Durchmesser der Bohrung ist, und einem verformten Zustand, in dem die Verankerungsringscheibe einen Außendurchmesser hat, der kleiner als der Durchmesser der Bohrung ist, verformt zu werden, wobei jeder Zahn (8.1) einen freien Teil mit einem Endrand (8.3) hat, um in die Wand der Bohrung einzugreifen, und einen mit den Umfangsabschnitten verbundenen Teil, wobei der freie Teil der Zähne gegenüber dem verbundenen Teil vergrößert ist und der Endrand mindestens einen Abschnitt (8.4) umfasst, der die Kerbwirkungen in einem Abstand zu den Enden des Endrandes begünstigt.

10. Schnellkupplungsvorrichtung (1) zur Schnellkupplung eines Rohres (104) nach Anspruch 9, bei der der Endrand (8.3) ein Kreisabschnitt mit einem Durchmesser ist, der kleiner als der Durchmesser der Bohrung ist, wobei der freie Teil des Zahns (8.1) eine konvexe Form hat.

11. Schnellkupplungsvorrichtung (1) zur Schnellkupplung eines Rohres (104) nach Anspruch 9, bei der der Endrand (8.3) zwei Endabschnitte mit konvexer abgerundeter Form umfasst, die miteinander über einen zentralen Abschnitt mit konkaver abgerundeter Form verbunden sind, wobei zwischen jedem der Endabschnitte und dem konkaven Endabschnitt eine Spitze gebildet ist.

12. Schnellkupplungsvorrichtung (1) zur Schnellkupplung eines Rohres (104) nach Anspruch 1, bei der das Ende (7.1) des rohrförmigen Trennstößels (7), das zur Rückhalteringscheibe des Rohres (8) zeigt, mindestens einen axialen Schlitz (7.5) umfasst.

## Claims

1. A quick coupling device (1) of the type comprising a cartridge for inserting in a socket (102) of a circuit element (100) for connection to a tube (104) of longitudinal axis (X), the device comprising a tubular body (2) defining a channel (3), a retaining washer (9) for retaining the tube (104) in the device (1), a tubular disconnection pusher (7) that is slidably mounted in the channel (3) and that defines a duct (12) for passing the tube (104), and anchor means (8) for anchoring the coupling device (1) in the socket (102), the body (2) having an end provided with a retractable ring (5) that projects axially from said end (2.1) in order to carry internally an annular sealing member (10) of the coupling device (1) and in order to be suitable for being returned against the body (2) in order to release the annular sealing member (10) in the socket (102), the device being **characterized in that** the retaining washer (9) is arranged in the retractable ring (5) between the body (2) and the annular sealing member (10).

2. A quick coupling device (1) for coupling a tube (104) according to claim 1, wherein a spacer (11) is mounted in the retractable ring (5) between the annular sealing member (10) and the retaining washer (9).

3. A quick coupling device (1) for coupling a tube (104) according to claim 2, wherein the spacer (11) is substantially annular in shape and includes a transversely-extending first face (11.1) in contact with the annular sealing member (10) and a second face (11.2) opposite from the first face and including an internal chamfer (11.3).

4. A quick coupling device (1) for coupling a tube (104) according to claim 2 or claim 3, wherein the outer peripheral surface of the spacer (11) is provided with an annular groove (11.4).

5. A quick coupling device (1) for coupling a tube (104) according to claim 1, wherein the retractable ring is connected to the tubular body (2) by a breakable wall.

6. A quick coupling device (1) for coupling a tube (104) according to claim 1, wherein the anchor means for anchoring the tubular body (2) in the socket (102) comprise an externally-anchoring washer (8).

7. A quick coupling device (1) for coupling a tube (104) according to claim 6, wherein the externally-anchoring washer (8) is carried by the tubular disconnection pusher (7).

8. A quick coupling device (1) for coupling a tube (104) according to claim 6, wherein the externally-anchoring washer (8) has outwardly projecting teeth (8.1), the teeth (8.1) being connected together in pairs by a flat circumferential portion (8.2) that is elastically deformable in twisting to enable the teeth (8.1) to move between a state for freely passing the tubular body in the socket (102) and a state for anchoring the tubular body (2) in the socket (102).

9. A quick coupling device (1) for coupling a tube (104) according to claim 6, wherein the anchoring washer (8) has teeth (8.1) connected together by circumferential portions (8.2) so as to be elastically deformable between a rest state in which the anchoring washer has an outside diameter greater than the diameter of the socket, and a deformed state in which the anchoring washer has an outside diameter less than the diameter of the socket, each tooth (8.1) having a free portion with a terminal edge (8.3) for biting into the wall of the socket and a portion that is connected to the circumferential portions, the free portion of each tooth being enlarged relative to the connected portion and the terminal edge including at least one portion (8.4) for increasing stress concentration at a distance from the ends of the terminal edge.

10. A quick coupling device (1) for coupling a tube (104) according to claim 9, wherein the terminal edge (8.3) is a segment of a circle of diameter smaller than the diameter of the socket, the free portion of the tooth (8.1) being convex in shape.

11. A quick coupling device (1) for coupling a tube (104) according to claim 9, wherein the terminal edge (8.3) has two end portions of convex rounded shape that are connected together via a central portion of concave rounded shape, between each of the end portions and the concave end portion, being in the shape of a spike.

12. A quick coupling device (1) for coupling a tube (104) according to claim 1, wherein the end (7.1) of the tubular connection portion (7) facing the tube retaining washer (9) includes at least one axial slot (7.5).
